# EUROPEAN PATENT APPLICATION

(11) **EP 4 230 834 A1**
(43) Date of publication of application: **23.08.2023**
(21) Application number: 23156011.1
(22) Date of filing: 10.02.2023
(51) Int. Cl.: E06B 9/266, D06H 7/00, B23B 41/02, B23B 51/06, E06B 9/262

(54) **DRILLING DEVICE AND METHOD FOR DRILLING HOLES IN A WINDOW COVERING FABRIC PACKAGE**

(30) Priority: 16.02.2022 NL 2030970
(71) Applicant: Coulisse B.V., 7468 DC Enter (NL)
(72) Inventor: DE VRIES, Ruben Hubert Jan, 6905 AK Zevenaar (NL); KLEIN TUENTE, Bastiaan Franciscus, 7141 LB Groenlo (NL); STARREN, Bram, 6247EJ Gronsveld (NL); JANSSENS, Maarten Petrus Maria, 6285 BA Epen (NL)
(74) Representative: Mink-Lindenburg, Charlotte Hildegard

(57) **Abstract**

A drilling device (1) and a method for drilling holes in a stack of material (100). The drilling device is provided with clamping means (23, 26) for clamping the material, a hollow drill (10) with an internal channel and a drive (3) for the hollow drill. The drilling device is further provided with connecting means (4) for cooling means, that are arranged for conducting gas through the internal channel, and suction means (51) for suctioning drilling debris. The drilling shaft is provided with a cut out, that runs in longitudinal direction along the drill shaft and forms a discharge channel for the drilling debris. A machine for machining and assembling window coverings, such as pleated blinds, comprising one or more of the drilling devices.

## Description

The present invention relates to a drilling device for drilling holes in stacks of material, such as a window covering fabric package, for example a pleated blind, which drilling device is provided with clamping means for clamping the fabric package, a hollow drill with an internal channel and a drive for the hollow drill.

Such a drilling device is known in the field. An example hereof is the PDM850 Plissee-Stoffbohrmaschine, that is placed on the market by Benthin Technology GmbH, located in Bremerhaven, Germany. Another example is the Nagel Citoborma, a paper drilling machine that is placed on the market by Ernst Nagel GmbH, located in Stuttgart Germany. US5098234 describes as state of the art the use of hollow drills for drilling holes in stacks of paper or in folded cloth.

The known drilling devices have various drawbacks. An important drawback is the limited drilling depth. With for example the known drilling device by Benthin stacks of material with a height > 80 mm need to be pierced from two sides. This can easily lead to undesirable inaccuracies in the position or the diameter of the holes. Another drawback is that the known drilling devices generate so much heat that melting, discoloration and/or burning of the material occurs.

The invention aims to provide a drilling device that eliminates these drawbacks.

The drilling device according to the invention therefore characterizes in that, the drilling device is further provided with connecting means for cooling means, which are arranged for conducting gas through the internal channel, suction means for suctioning drilling debris, wherein the drill shaft is provided with a cut out, that runs in longitudinal direction along the drill shaft and forms a discharge channel for the drilling debris. Owing to these technical measures much deeper holes can be drilled with the drilling device according to the invention with high accuracy without damages to the material. Furthermore, it is prevented that the hollow drill gets clogged by the drilled-out material, which is referred to as drilling debris in the relevant field.

In a first preferred embodiment of the drilling device according to the invention the tip of the drill is arranged for chipping the drilling debris. A chip breaker is arranged on the drill shaft, preferably on or close to the drill tip. Chipped drilling debris can be discharged more easily and quicker.

In a further preferred embodiment of the drilling device according to the invention the drill tip lies outside of the centreline of the drill shaft. Consequently, the cutting speed of the drill tip is greater than zero.

In another preferred embodiment of the drilling device according to the invention the proximal end of the drill shaft is narrowed relative to the distal end. This leads to reduction of friction along the drill shaft resulting in less heat formation in the material.

In an elegant, preferred embodiment of the drilling device according to the invention the clamping means comprise a first clamp, wherein a first guiding tube for the drill is arranged for guiding the drill shaft upon first entry into the material. The first guiding tube contributes to the accuracy of the drilled holes. According to a further elaboration the first guiding tube has an engineering fit relative to the distal end of the drill shaft. The engineering fit guarantees optimal guiding of the drill shaft and contributes to optimal suctioning of the drilling debris.

According to a practical preferred embodiment of the drilling device according to the invention the clamping means comprise a second clamp, in which a second guiding tube is arranged for guiding the drill shaft upon first exit out of the material. According to a further elaboration hereof the second guiding tube is oversized relative to the distal end of the drill shaft. The oversize guarantees that the drill will not drill into the wall of the second guiding tube.

In an efficient preferred embodiment of the drilling device according to the invention the suction means comprise first suction means, which are arranged for creating negative pressure close to the first guiding tube. In conjunction with the cooling means a gas flow is generated in the drilling device with which the drill will be cooled and the drilling debris will be removed.

In a next preferred embodiment of the drilling device according to the invention the suction means comprise second suction means, that are arranged for creating negative pressure close to the second guiding tube. By means of the second suction means remaining drilling debris can be removed from a continuous drill hole.

In yet another preferred embodiment of the drilling device according to the invention the cooling means are arranged for air cooling, preferably compressed air cooling.

The invention further relates to a method for drilling holes in a window covering fabric package, for example a pleated blind, using the drilling device according to the invention, wherein the method comprises the following steps: a) placing of the fabric package between the clamping means; b) configuring one or more of the configuration parameters out of a set of configuration parameters, comprising clamping force, rotational speed, feed rate, cooling gas pressure and negative pressure for suctioning; c) drilling through the fabric of the fabric package in one drilling step; d) conducting of gas through the internal channel for cooling of the drill; and e) suctioning of the drilling debris. The method according to the invention is suitable for drilling holes in any type of fabric package in one drilling step.

In a first preferred embodiment the method according to the invention is suitable for drilling holes in a fabric package that is provided with tendons on either side for accommodation in rails. By configuring one or more of the configuration parameters on the tendons and on the fabric, it is possible to drill through the tendons and fabric of the window covering fabric package in one drilling step. This has the advantage that the assembly step of punching the tendons is eliminated. Using the method according to the invention, assembling the window covering can be executed in a shorter timeframe compared to the state of the art.

According to a second preferred embodiment the method according to the invention is suitable for drilling holes in a fabric package that is provided on either side with tendons and rails, in which the tendons are accommodated. By configuring one or more of the configuration parameters on the rails, the tendons and on the fabric it is possible to drill through the rails, the tendons and fabric of a window covering fabric package in one drilling step. The drilling device according to the invention allows this, leading to an even more efficient production.

The invention also relates to a machine for machining and assembling of window coverings, such as pleated blinds, comprising one or more drilling devices according to the invention.

The invention will now be described in more detail with reference to the figures, wherein
Figure 1 shows a schematic view of the drilling device according to the invention;
Figure 2 shows the drilling device from figure 1 with fabric package in cross-section;
Figure 3 shows a schematic detailed view of the drill as a component of the drilling device in figure 1; and
Figure 4A and 4B show parts of the drill from figure 3 in more detail from different perspectives.

Similar reference numbers in the different figures refer to similar components.

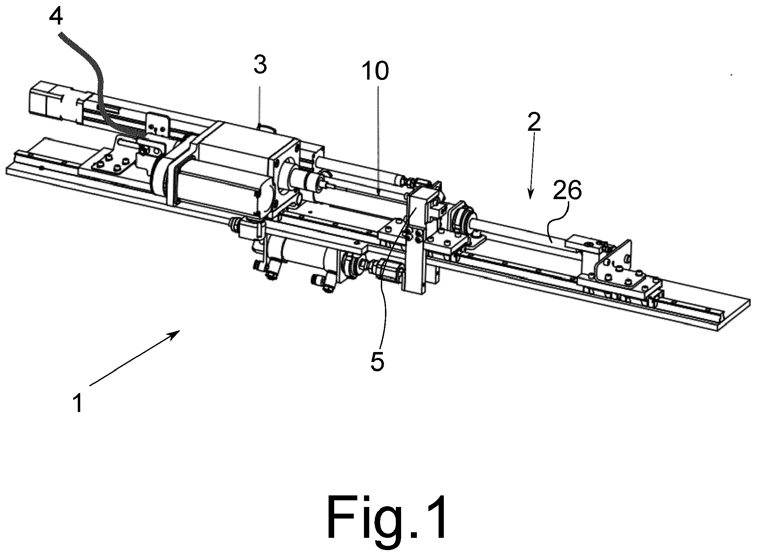

Figure 1 shows a schematic view of a drilling device 1 according to the invention. The drilling device 1 is intended for drilling holes in a stack of material, for example a compressed window covering. In the fabric, the tendons and the rails of a window covering continuous holes are required for cords, which should extend in vertical direction through the flexible material. With a pleated blind, for example, these are tension cords that also run through the rails.

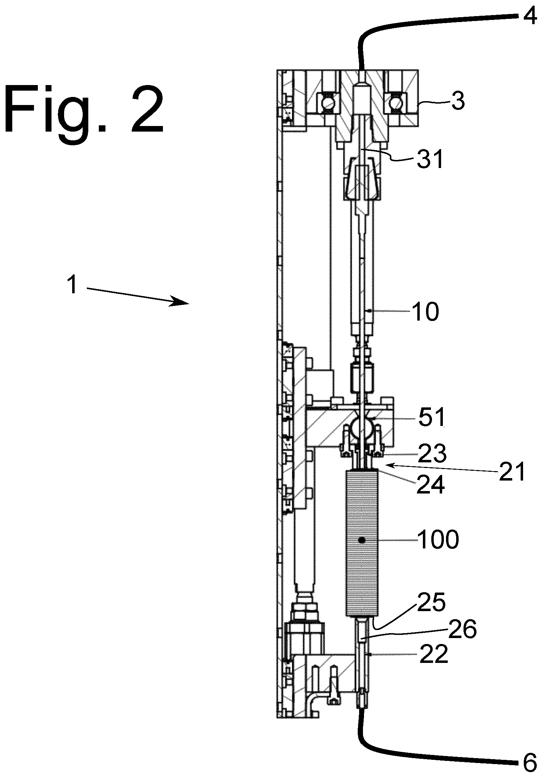

Figure 2 shows the drilling device 1 in cross-section with a stack of material 100, in this example folded fabric for a window covering, for example a pleated blind. The drilling device 1 is provided with clamping means 2 for clamping and compressing the material. In the shown preferred embodiment, the clamping means 2 are arranged for clamping the material in a vertical orientation. The material is compressed as a fabric package 100. The height of the fabric package is indicated as fabric height.

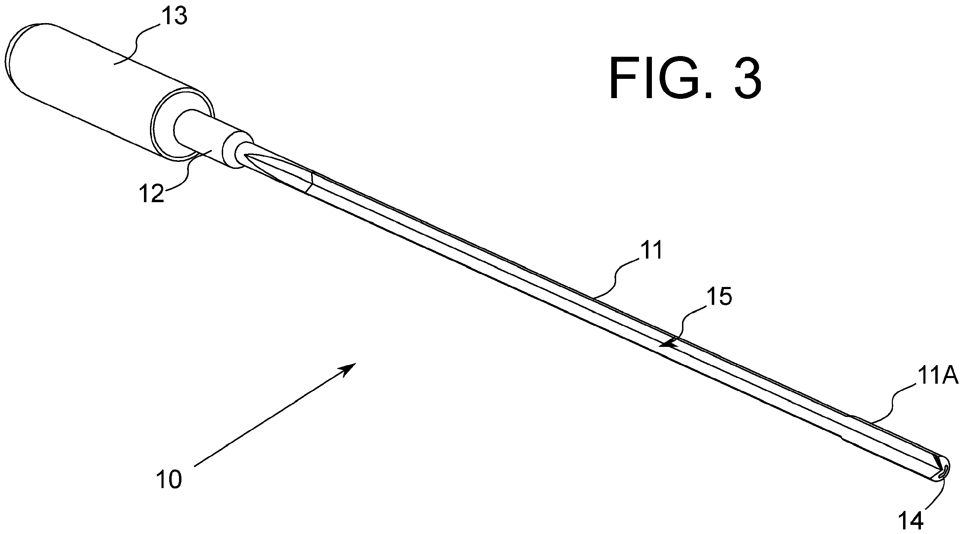

The drilling device 1 is further provided with a hollow drill 10 and a drive 3 for the hollow drill. Figure 3 shows a preferred embodiment of the drill 10 in more detail. The drill 10 has a drill shaft 11 in which runs an internal channel 14. The drill shaft 11 is provided with a cut out 15, that runs in longitudinal direction along the drill shaft. The drill shaft 11 is provided with an intake shaft 12, 13 at the proximal end, for placing in a tensioning device, for example a collet 31. The drill shaft 11 is provided with a tip 16 at the distal end.

The drilling device 1 comprises connecting means 4 for cooling means, that are arranged for conducting gas through the internal channel 14 of the hollow drill 10. Preferably, air cooling is being utilized, in particular compressed air cooling. In the shown preferred embodiment, the drive 3 is a spindle with a hollow axis for passage of compressed air to the internal channel 14 of the hollow drill 10.

The drilling device 1 comprises first suction means 5 for suctioning drilling debris through the cut out 15, that functions as an external discharge channel for the drilling debris.

The drilling device 1 comprises guiding tubes 23, 26 for the drill shaft 11. Preferably, the guiding tubes 23, 26 are integrated in the clamping means 2. The clamping means 2 comprise a first clamp 21 and a second clamp 22. In the vertical orientation of the drilling device 1 in figure 2 the first clamp 21 is the upper clamp and the second clamp 22 is the lower clamp.

In the shown preferred embodiment a first guiding tube 23 is integrated in the first clamp 21. The first clamp 21 further comprises a first clamping plate 24, that when used presses against a side of the fabric package 100.

In the shown preferred embodiment a second guiding tube 26 is integrated in the second clamp 22. The second clamp 22 comprises a second clamping plate 25, that when used presses against an opposite side of the fabric package 100.

If the fabric package 100 is provided on both sides with tendons for accommodation in rails, the clamping plates 24, 25 will press against the tendons. The clamps 21, 22 are moveable relative to each other to compress the fabric package with configurable clamping force. In an assembled window covering provided with rails, the clamping plates 24, 25 press against the rails. The drilling device 1 is provided with a control that is arranged for configuring the correct clamping force per fabric package or per window covering depending on the composition of the fabric package respectively the window covering. In the shown preferred embodiment, the second clamp 25 is provided with a drive, for example a cylinder.

The first suction means 5 comprise a suction channel 51, that is connected air-tight to the input side of the guiding tube 23. The first suction means 5 are arranged for creating negative pressure at the input side of the guiding tube 23. During use drilling debris is automatically discharged through the external discharge channel 15 of the drill 10 through the guiding tube 23 and the suction channel 51. Preferably, cooling means with positive pressure offer compressed air to the drive 3 that is blown through the internal channel 14 out of the drill tip 16 into the drilling hole. As a result, an air flow is produced, that functions as cooling and also blows away the drilling debris through the discharge channel 15, the first guiding tube 23 and the suction channel 51.

Optionally the drilling device comprises means for blowing the drill hole clean. Preferably, additional connecting means 6 are thereto provided for guiding gas through the end of the guiding tube 26 to clear the drill hole of any drilling debris. Preferably, air, in particular compressed air, is being utilized.

Preferably, the drilling device comprises second suction means for creating negative pressure close to the second guiding tube 26.

Preferably, the drilling device 1 is provided with configuration means for configuring a set of configuration parameters, such as the abovementioned clamping force of the clamping plates 24, 25. Examples of other configuration parameters are the rotational speed of the drill 10, the feed of the drill 10 (i.e. the speed with which the drill moves through the material), the (positive) pressure of the cooling gas and the negative pressure during suctioning. The configuration means can be manual control means, that can be controlled by an operator. The configuration means can also comprise a (semi)automatic control. The required information can be read out per fabric package / window covering using scanning means or can be retrieved from a database.

In the shown preferred embodiment the diameter of the drilling shaft 11 close to the drill tip 16 is greater than the diameter of the drilling shaft 11 close to the intake shaft 12, 13. The drill shaft 11 is narrowed close to the intake shaft 12 (i.e. the proximal end) relative to the part 11A (i.e. the distal end) of the drill shaft close to the tip 16. The narrowed part of the drill shaft preferably spans substantially 80% of the total length of the drill shaft.

The first guiding tube 23 has an engineering fit relative to the distal end 11A of the drill shaft 11 for optimal guidance and later also optimal suction. The second guiding tube 26 is oversized relative to the distal end 11A of the drill shaft 11.

The cross-section of the internal channel 14 is preferably C-shaped or half-moon shaped or kidney shaped. These shapes contribute to the strength of the drill. The walls of the external channel 15 stand preferably at an obtuse angle. The external channel 15 substantially runs along the entire drill shaft 11, virtually from the intake shaft 12 until the drill tip 16.

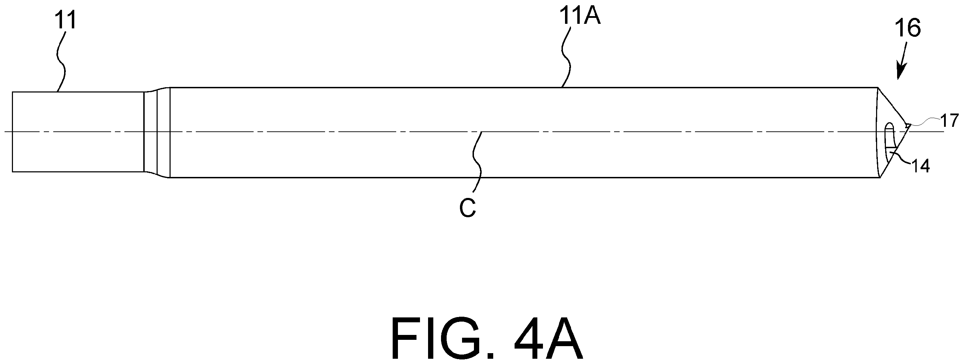

Figure 4A shows the distal end 11A of the drill shaft 11 with the drill tip 16 in more detail from a first perspective, in which one faces the convex side of the drill shaft, i.e. the side without the discharge channel. The drill geometry of the drill tip 16 of the drill 10 is arranged for chipping the drilling debris. The drill point 17 is sharpened off centre, i.e. the drill point 17 does not lie on the centreline C of the drill shaft 11.

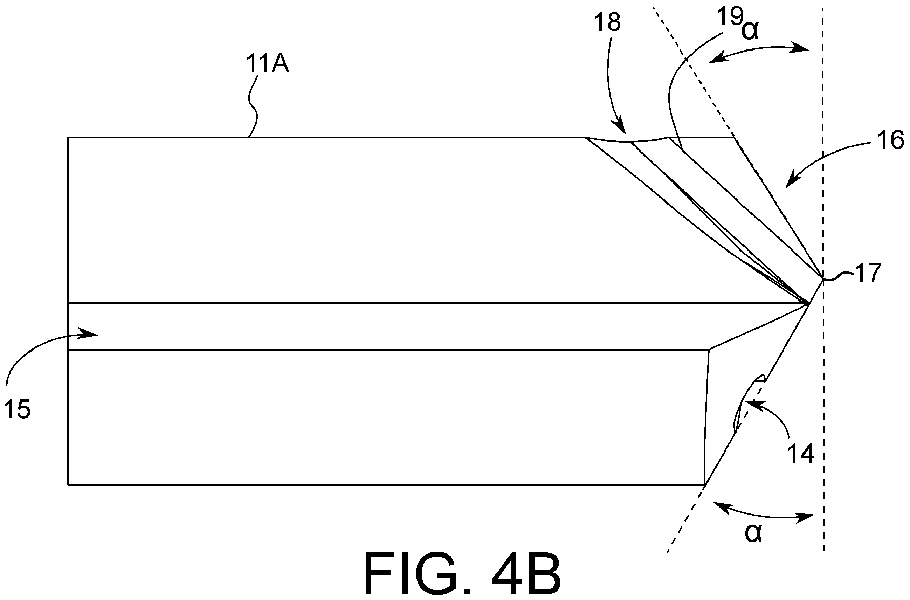

Figure 4 B shows the distal end 11A of the drill shaft 11 with the drill tip 16 from a second perspective, in which one faces the discharge channel 15.

On the distal end 11A of the drill shaft 11 a groove 18 is arranged with adjacently an auxiliary cutting edge 19, forming a chipping edge. Owing to the chipping edge a chip that has been drilled from the material breaks in ultimately small material particles, that can more easily be discharged along the external channel 15 of the drill shaft.

In the shown preferred embodiment the drill tip 16 has a top angle α of substantially 30 degrees. An optimal range for the top angle lies between 10 and 50 degrees, preferably between 20 and 40 degrees.

The invention also relates to a method for drilling continuous holes through a fabric package, also when this is provided with tendons or even with tendons and rails. The drilling device according to the invention is very suitable for use in this method.

The first method step comprises placing of the fabric package between the clamping means. The position of the holes to be drilled is accurately centred in the middle of the fabric.

The method comprises a further step of configuring one or more of the configuration parameters out of a set of configuration parameters. The set of configuration parameters comprises: clamping force, rotational speed, feed rate, cooling gas pressure and negative pressure for suctioning. Configuring can be done manually or (semi)automatically, for example after scanning a barcode on the fabric package or on the window covering.

The clamping force value is adjusted for the fabric. Woven cloth calls for a much higher clamping force compared to non-woven cloth for example. By varying the clamping force, the drilling process is optimally efficiently arranged.

The method comprises a further step of drilling through the fabric of the fabric package (either with or without tendons or even tendons and rails) in one drilling step with chosen configuration values for the rotational speed and the feed rate.

The value of the rotational speed is adjusted for the material. In case of window covering the material of the rails is for example aluminium, the tendons are plastic and the fabric package comprises cloth. These materials are drilled using different rotational speeds to counteract discoloration/burning/melting. The configuration value for rotational speeds preferably lies in the range of 0-12000 revolutions per minute.

Also for the feed rate different configuration values are chosen for aluminium, plastic and fabric. Subsequently, per fabric type a different configuration is possible. The feed rate is related to the rotational speed. The configuration value for the feed rate preferably lies in the range between 0-3000 mm/min.

The method comprises a further step of conducting of gas through the internal channel 14 of the drill 10 for cooling of the drill. The gas is preferably presented with positive pressure. A suitable cooling gas is cold compressed air. The gas flow also contributes to expelling chips and drilling debris. In particular chips of the (aluminium) rails should be removed to prevent damage to the fabric, cords and the control mechanism.

The method comprises a further step of suctioning of the drilling debris during drilling. Preferably, negative pressure is created at the first guiding tube 23, such that drilling debris during drilling is automatically discharged through the external discharge channel 15 of the drill 10. Optionally the drilling debris is actively suctioned, for example using a vacuum cleaner.

More preferably, negative pressure is created at the second guiding tube, such that the drilled through hole can be cleared from drilling debris, facilitating easier feeding of the cords. Optionally drilling debris is actively suctioned, for example using a vacuum cleaner.

Using the shown and described preferred embodiment of the drilling device according to the invention accurate holes with a diameter of 3,5mm along a length of 120mm have been drilled in a fabric package of a pleated blind.

The invention is naturally not limited to the described and shown preferred embodiment. The drilling device according to the invention is for example also suitable for other applications and can in general drill holes through a stacked package of different materials with different hardness's, including fabric, plastic and aluminium. The drilling device can be added to a machine as a module. Pneumatic cylinders, for example for a drive, present on the machine are suitable for supply of compressed air to the connecting means 4 and/or 6.

The invention therefore extends to any embodiment that falls within the scope of protection, as defined in the claims and viewed in the light of the foregoing description and accompanying drawings.

## Claims

1. Drilling device for drilling holes in a window covering fabric package, for example a pleated blind, which drilling device is provided with clamping means for compressing the fabric package, a hollow drill with an internal channel and a drive for the hollow drill, **characterized in that**, the drilling device is further provided with connecting means for cooling means, which are arranged for conducting gas through the internal channel, and suction means for suctioning drilling debris, wherein the drill shaft is provided with a cut out, that runs in longitudinal direction along the drill shaft and forms a discharge channel for the drilling debris.

2. Drilling device according to claim 1, wherein the tip of the drill is arranged for chipping the drilling debris.

3. Drilling device according to claim 2, wherein a chip breaker is arranged on the drill shaft, preferably on or close to the drill tip.

4. Drilling device according to one of the preceding claims, wherein the proximal end of the drill shaft is narrowed relative to the distal end.

5. Drilling device according to one of the preceding claims, wherein the clamping means comprise a first clamp, wherein a first guiding tube for the drill is arranged for guiding the drill shaft upon first entry into the material.

6. Drilling device according to claim 5, wherein the first guiding tube has an engineering fit relative to the distal end of the drill shaft.

7. Drilling device according to one of the preceding claims, wherein the clamping means comprise a second clamp, in which a second guiding tube is arranged for guiding the drill shaft upon first exit out of the material.

8. Drilling device according to claim 7, wherein the second guiding tube is oversized relative to the distal end of the drill shaft.

9. Drilling device according to one of the preceding claims 5-8, wherein the suction means comprise first suction means, which are arranged for creating negative pressure close to the first guiding tube.

10. Drilling device according to claim 7 or 8, wherein the suction means comprise second suction means, which are arranged for creating negative pressure close to the second guiding tube.

11. Drilling device according to one of the preceding claims, wherein the cooling means are arranged for air cooling, preferably compressed air cooling.

12. Method for drilling holes in a window covering fabric package, for example a pleated blind, using the drilling device according to one of the preceding claims, wherein the method comprises the following steps: a) placing of the fabric package between the clamping means; b) configuring one or more of the configuration parameters out of a set of configuration parameters, comprising clamping force, rotational speed, feed rate, cooling gas pressure and negative pressure for suctioning; c) drilling through the fabric of the fabric package in one drilling step; d) conducting of gas through the internal channel for cooling of the drill; and e) suctioning of the drilling debris.

13. Method according to claim 12, wherein the fabric package is provided with tendons on either side for accommodation in rails, in which in step a) the clamping means abut the tendons; in step b) different values of one or more of the configuration parameters are configured for the tendons and for the fabric; and in step c) drilling is being performed in one drilling step through the tendons and the fabric of the fabric package.

14. Method according to claim 13, wherein the fabric package is provided with rails on either side, in which the tendons are accommodated, in which in step a) the clamping means abut the rails; in step b) different values of one or more of the configuration parameters are configured for the rails, the tendons and the fabric; and in step c) drilling is being performed in one drilling step through the rails, the tendons and the fabric of the fabric package.

15. Machine for machining and assembling of window coverings, such as pleated blinds, comprising one or more drilling devices according to one of the preceding claims 1-11.
